# EUROPEAN PATENT SPECIFICATION

(11) **EP 1 330 378 B1**
(45) Date of publication and mention of the grant of the patent: **02.06.2004**
(21) Application number: 01976504.9
(22) Date of filing: 23.10.2001
(51) Int. Cl.: B60R 19/22, B60R 21/34

(54) **ENERGY ABSORBING BUMPER STRUCTURE**
ENERGIE AUFNEHMENDE STOSSSTANGENSTRUKTUR
STRUCTURE DE BUTOIR ABSORBANT L'ENERGIE

(30) Priority: 24.10.2000 GB 0025987
(43) Date of publication of application: 30.07.2003
(73) Proprietor: Cellbond Limited, Huntingdon, Cambridgeshire PE29 6EF (GB)
(72) Inventor: ASHMEAD, Michael, Huntingdon, Cambridgeshire PE29 6EF (GB)
(74) Representative: Evens, Paul Jonathan
(86) International application number: PCT/GB2001/004690
(87) International publication number: WO 2002/034578

(56) References cited:
- DE-A- 19 830 099
- US-A- 4 029 350
- US-A- 4 597 601
- US-A- 5 746 419

## Description

The present invention relates to an energy-absorbing structure for absorbing impact energy or to a method of fabricating such a structure according to the features of the preamble of claim 1 or 18. This prior art is shown in U-S-A-4 029 350.

### BACKGROUND ART

Energy-absorbing structures are widely used in vehicles such a motor cars to absorb energy should the vehicle be involved in an accident. By absorbing energy, less of the impact force generated in the accident is transmitted to the vehicle's occupants, thereby helping to avoid serious injury. Due to the success of such occupant-friendly energy absorbing structures, attention is now turning to energy-absorbing structures which could help reduce risk of serious injury to pedestrians involved in road accidents with vehicles.

Pedestrian-friendly energy-absorbing structures need to be located on the external periphery of vehicles; a location where aesthetics and certain other practical considerations are dominant factors in vehicle design. Thus, it must be possible to wake such pedestrian-friendly structures smooth-skinned and with curving profiles. In addition, the structures must have an ability to withstand routine "wear and tear", and an ability to yield sacrificially when impact energy exceeds a threshold level. However, these requirements present a problem in that making a structure which is able to withstand light impact (e.g. from stone chipping projectiles or even car wash brushes) suggests design criteria which are the antithesis of those required to make a structure with desired "yieldability" to safeguard pedestrians.

The present applicants have devised a novel, pedestrian-friendly energy-absorbing structure.

### DISCLOSURE OF INVENTION

In accordance with the present invention, there is provided an energy-absorbing structure according to the features of claim 1.

It is believed that the points or lines of weakness in the skin will ease manufacture of components with complex, perhaps curving profiles, whilst at the same time ensuring there is sufficient skin strength to resist puncture by certain projectiles such as stone chippings which are commonly encountered on the roads. In addition, it is believed that the structure itself will have the requisite macroscopic yieldability to function as crash padding for pedestrians to help protect the pedestrians from serious injury.

Lines of weakness in the skin may be provided by an array of grooves or slots in one side of the skin. The said one side may be adjacent to the sacrificial member.

The skin may comprise a laminated structure with the array of grooves or slots being formed in a first layer of the laminated structure. A second or protective layer may be bonded to the first layer, the protective layer preventing gaps opening in the skin as the first layer deforms on impact. The protective layer may be more ductile that the first layer. The laminated structure may be in the form of a sandwich structure with the first layer being sandwiched between two protective layers, at least one of which prevents gaps opening in the skin as the first layer deforms on impact . The first layer may be bonded to the or each protective layer by an adhesive layer which is preferably of low modulus, for example polyurethane or epoxy adhesive. The adhesive layer may prevent delamination (i.e. the layers becoming detached from each other) by allowing slippage between the layers on impact.

The grooves or slots in the array may each have an elongate profile. The elongate profiles may be aligned. Some of the elongate profiles may be aligned in a first direction, and others may be aligned in a second direction. Frist and second directions may be substantially orthogonal to each other. The grooves or slots may form a grid-like or criss-cross pattern.

In one embodiment, the lines of weakness in the skin may be provided by a reinforcing sheet providing a first amount of reinforcement in one region and a second amount of reinforcement in another region, the first reinforcement being greater than the second. The skin may comprise a composite structure having a reinforcing sheet in the form of a textile fabric material, perhaps embedded in a matrix of resin. The textile fabric may have different weave densities to achieve the first and second amounts of reinforcement. Alternatively a mixture of higher and lower strength fibres woven may be employed.

The lower strength reinforcement fibres are weaker than the higher strength reinforcement fibres, the mixture may thus be arranged to form lines of weakness. The lines of weakness may form a grid-like pattern. The reinforcement fibres may be glass fibres of differing thickness with the higher strength fibres having greater thickness than the lower strength fibres.

The sacrificial member may comprise a honeycomb structure, possibly a honeycomb structure as described in International application WOP8/06553, the entire contents of which are incorporated herein by reference. Alternatively, or additionally, the sacrificial member may comprise a press load (or egg box) structure, possibly as described in International application WO00/31434, the entire contents of which are incorporated herein by reference.

There is also provided a vehicle (preferably a motor vehicle such as a car) in which at least one external part comprises an energy-absorbing structure in accordance with the present invention.

In accordance with another aspect of the present invention, there is provided an energy transfer surface for an energy absorbing structure comprising a sheet of formable material having points or lines of weakness pre-formed therein. The sheet material may have some or all of the features of the skin used in the energy absorbing structure described above.

In accordance with another aspect of the present invention, there is provided a method of fabricating an energy-absorbing structure according to the features of claim 18.

The skin may be in the form of a laminated structure comprising a first, layer having points or lines of weakness therein and a protective layer bonded to the first layer to prevent gaps opening in the skin as the first layer deforms on impact. The points or lines of weakness may be provided by cutting an array of grooves or slots in the skin. The array may be cut in the surface of the skin which is bonded to the sacrificial member.

Alternatively, the lines of weakness in the skin may be provided by a reinforcing sheet providing a first amount of reinforcement in one region and a second amount of reinforcement in another region, the first reinforcement being greater than the second. The first and second amounts of reinforcement may be achieved by weaving a textile fabric material having regions of different weave densities. Alternatively, the first and second amounts of reinforcement may be achieved by employing a mixture of higher and lower strength fibres. The lower strength reinforcement fibres are weaker than the higher strength reinforcement fibres, and thus the mixture may be arranged to form lines of weakness.

The said one side of the sacrificial member may have a profile, and the skin may be pre-formed into a shape which corresponds to the profile of the said one side before it is covered.

### BRIEF DESCRIPTION OF DRAWINGS

An embodiment of the invention will now be described by way of example, with reference to and as illustrated in the accompanying drawings in which:
Figure 1 is an exploded cross-sectional view of an energy-absorbing structure embodying the present invention;
Figure 2 is a schematic cross-sectional view of the energy-absorbing structure of Figure 1, shown in context with a vehicle;
Figure 3 is a flow chart illustrating one method of fabricating the energy-absorbing structure of Figure 1;
Figure 4a is a plan view of one embodiment of a skin for the energy absorbing structure of Figure 1;
Figure 4b is a cross-section along line AA of Figure 4a;
Figure 5a is a plan view of another embodiment of a skin for the energy absorbing structure of Figure 1;
Figure 5b is a cross-section along line AA of Figure 5a;
Figure 6a is a schematic plan view of yet another embodiment of a skin for the energy absorbing structure of Figure 1;
Figure 6b is a cross-section along line AA of Figure 6a;
Figure 7a is a schematic plan view of yet another embodiment of a skin for the energy absorbing structure of Figure 1;
Figure 7b is a cross-section along line AA of Figure 7a;
Figure 8a is a plan view of still another embodiment of a skin for the energy absorbing structure of Figure 1;
Figure 8b is a cross-section along line AA of Figure 8a; and
Figure 9 is a perspective view of another embodiment of a sacrificial member for the energy-absorbing structure of Figure 1;

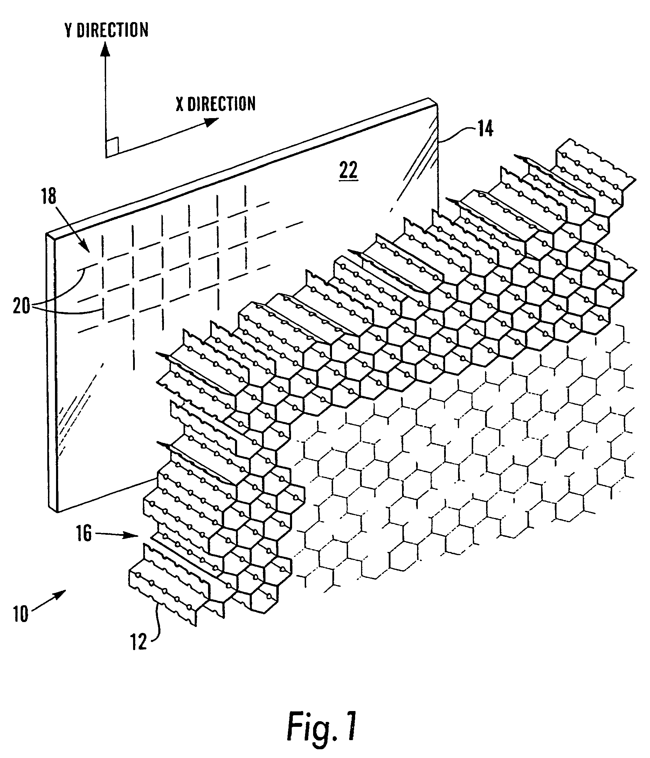

Figure 1 shows an exploded perspective view of an energy-absorbing structure 10 comprising a sacrificial member 12 (shown partly in phantom lines) and a skin 14 for covering one side 16 of the sacrificial member 12. The sacrificial member 12 is configured to deform permanently when absorbing impact energy and is illustrated as a honeycomb structure, but could easily be of "egg box" or other design). The skin 14 comprising metal (e.g. aluminium) has an array 18 of grooves 20 formed in the surface 22 closest to the sacrificial member 12. Some of the grooves 20 are aligned in a first direction (X-direction) and others are aligned in a second direction (Y-direction) which is orthogonal to the first direction. Ends of grooves 20 in the first and second directions are adjacent to form a grid-like pattern in the surface. The grooves 20 provide lines of weakness which improve yieldability of the structure 10 when in collision with large objects (e.g. pedestrians), but without adversely affecting damage resistance to small object, e.g. stone chippings.

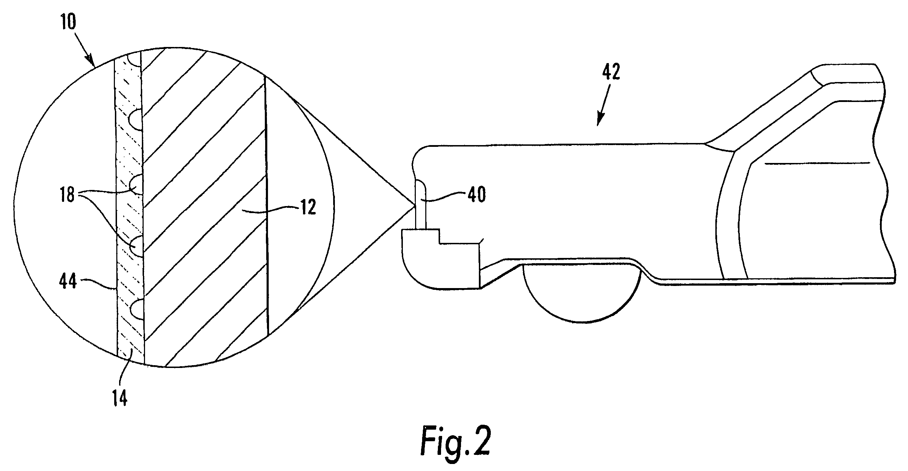

Figure 2 shows an enlarged cross-section view of the energy-absorbing structure 10 forming a front part 40 of a motor vehicle 42. The outermost surface 44 of the skin 14 is smooth and may be highly polished or painted in the same way as conventional body panels of motor vehicles.

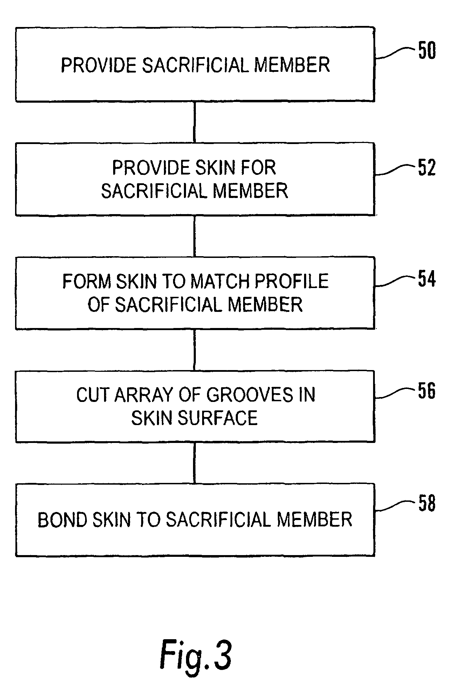

Figure 3 is a flow chart illustrating one method of forming the energy-absorbing structure 10. A sacrificial member is provided at 50 and has a desired profile corresponding to the intended use of the structure 10, e.g. curved profile of a car bumper. A skin of complementary site is provided at 52 and then formed (with heat) at 54 to match the profile of the sacrificial member so as to be a snug fit around one side of it. Once formed, the skin is mounted on a jig and an array of grooves is cut at 56 into one surface of the skin. (The array of grooves could be formed by electrochemical machining or even spark erosion) . The skin is then bonded at 58 to the sacrificial member, with the grooves adjacent the sacrificial member.

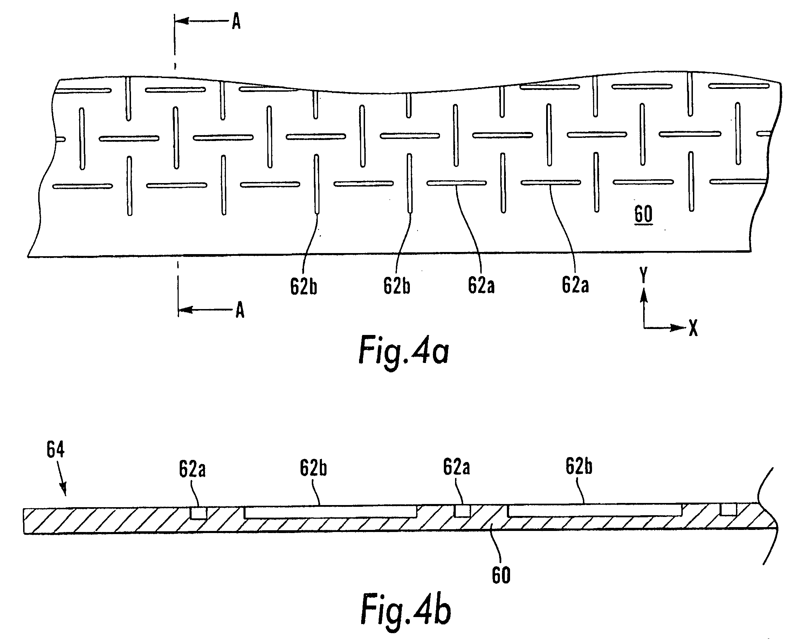

Figures 4a to 8b show skins having lines of weakness which may be used to cover one side of the sacrificial member for example the member 16 shown in Figure 1. Alternatively, the skins may be used alone as an energy transfer surface.

In Figures 4a and 4b, the skin 60 comprises a single layer of metal, e.g. aluminium. The lines of weakness are formed by elongate grooves 62a,b having a length of approximately 20mm to 30mm, a width of approximately 1mm and a depth approximately half the thickness of the skin. Each end of the groovees 62a, b are curved and have a substantially semi-circular shape. The grooves are formed in the surface 64 which is mounted closest to the sacrificial member (not shown).

Approximately half of the grooves 62a are aligned in a first direction (X-direction) and the remainder (grooves 62b) are aligned in a second direction (Y-direction) which is orthogonal to the first direction. The grooves 62a,b are arranged with one groove in one direction bisecting the space between a pair of grooves in the other direction. The grooves 62a,b thus form a criss-cross pattern in the surface.

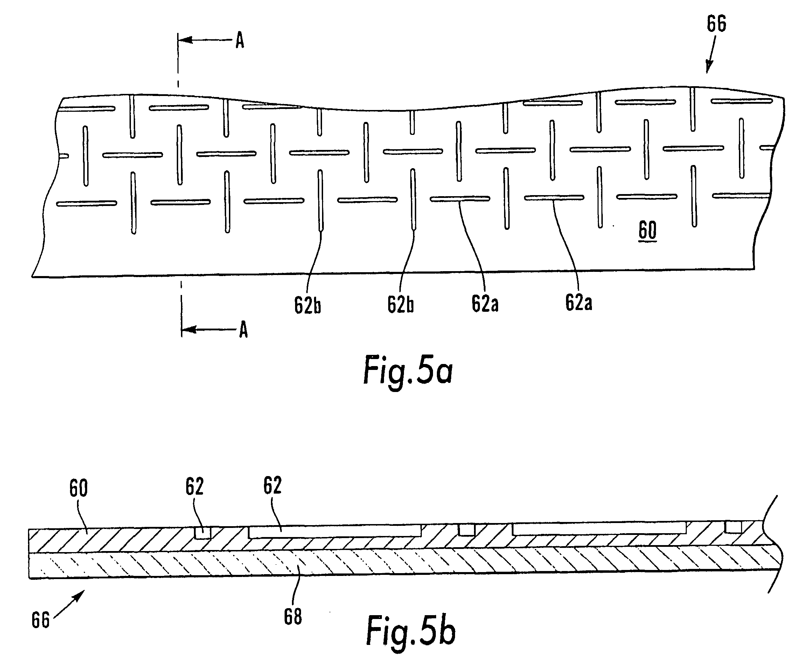

Any tendency for gaps to open in the skin 60 may be alleviated or prevented by mounting the skin 60 on an outer protective layer 68 of high stretch material, e.g. plastics or resilient paint, to form the skin 66 of Figures 5a and 5b. The skin 66 is thus a laminated structure with the outer layer 68 forming an impact surface.

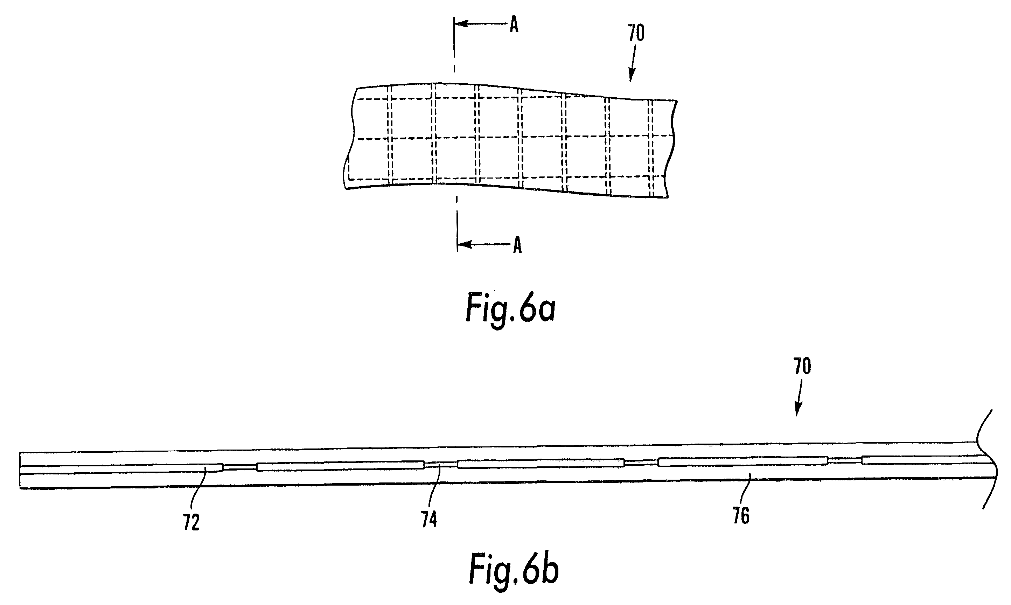

In Figures 6a and 6b, the skin 70 is a composite structure comprising higher strength and lower strength reinforcement fibres 72,74 e.g. glass, mounted in a resin matrix 76. The lower strength reinforcement fibres 74 are thinner and hence weaker than the higher strength reinforcement fibres 72. The lower strength reinforcement fibres 74 may also have a lower density than the higher strength reinforcement fibres 72. The lower strength reinforcement fibres 74 form a grid-like pattern of lines of weakness shown as dashed lines in Figure 6a.

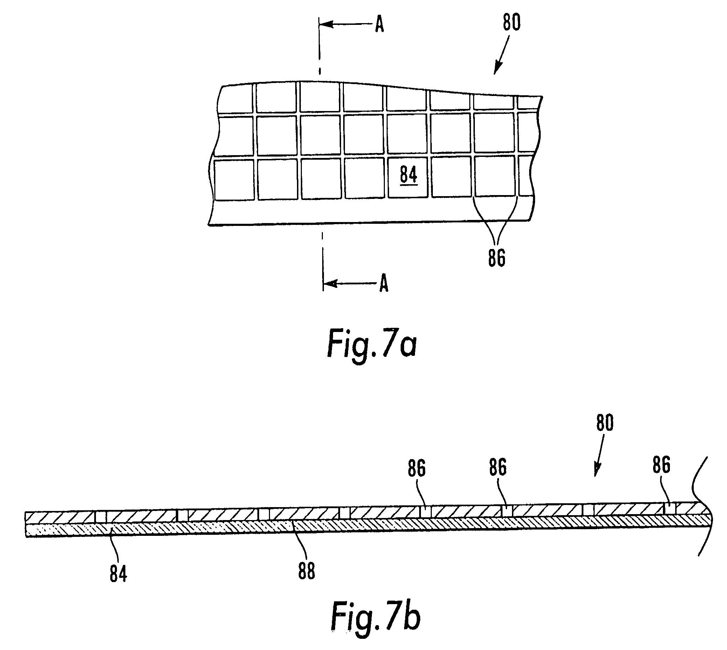

In Figures 7a and 7b, the skin 80 is a laminate formed from first and second layers 82, 84. The first layer 82 may be mounted adjacent the energy absorber (not shown) and is formed from metal, e.g. aluminium. The second or outer protective layer 84 is a thin gauge skin of metal, e.g. aluminium. The two layers 82, 84 are bonded using a layer of low modulus adhesive 88, e.g. polyurethane or epoxy adhesives. The adhesive layer 88 allows for slippage between the first and second layers 82, 84 to prevent delamination on impact.

The lines of weakness are formed in the first layer 82 by eroding slots 86 forcing apertures therethrough, e.g. by electrochemical machining or spark erosion. The slots may be eroded after the layers have been bonded and in this way the layer of adhesive prevents 88 erosion into the second layer 84. The slots 86 extend across the length and width of the first layer in two perpendicular directions to form a grid-like pattern. The slots 86 have a width of approximately 1mm and extend through the first layer 82. As with the embodiment of Figures 5a and 5b, the second layer 84 prevents gaps opening in the skin as the first layer 82 deforms on impact.

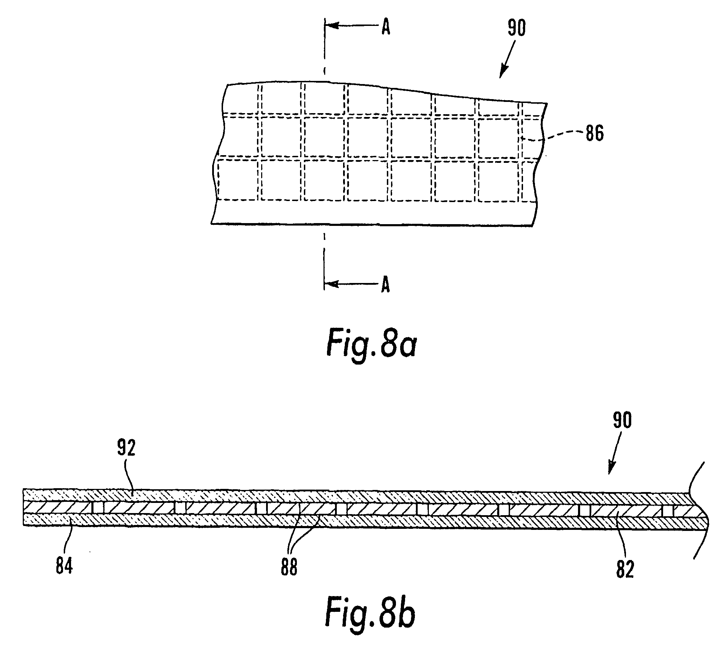

In Figures 8a and 8b, the skin 90 is a laminate formed from the skin 80 of Figures 7a and 7b mounted to a additional protective layer 92 by a layer of adhesive 88. The additional or third layer 92 is a thin gauge skin of metal, e.g. aluminium. The laminate thus comprises a slotted layer 82 consisting of square or rectangular "islands" sandwiched between two thin gauge skins or layers 92, 84. The slots 86 are shown in dashed lines in Figure 8a and may fill with adhesive when bonding to the additional layer. The additional layer 82 may be mounted adjacent an energy absorber.

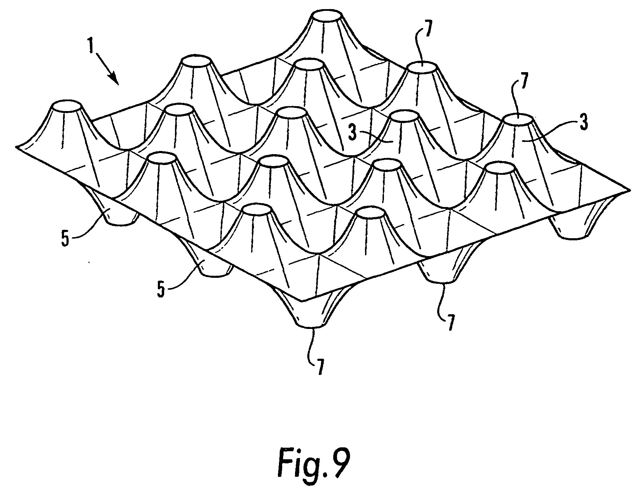

Figure 9 shows an alternative sacrificial member in the form of a non-planar member 1 having a pattern of alternating front projections 3 and rear projections 5, without substantial flat areas therebetween. The projections are frustoconical and hollow with substantially flat tops 7.

Each projection has a height of 30mm and a flat top 7 having a diameter of 10mm. The interpitch, i.e. distance between two projections extending from the same face of the sheet, is 50mm. Each projection has a pitch region, namely the portion of the member between the tops of the projections. The pitch region is inclined at an angle θ of approximately 26.5 degrees to a median plane which is a notional plane which locally represents the position of the non-planar member with the projections smoothed out. The flat tops are parallel to the median plane.

The parameters and pattern of the projections may be varied by selecting values from the following table:

| | Height H (mm) | Diameter D (mm) | Interpitch P (mm) | Angle A (degrees) |
|---|---|---|---|---|
| Geometry 1 | 20 | 15 | 70 | 45 |
| Geometry 2 | 10 | 9 | 35 | 40 |
| Geometry 3 | 20 | 12.5 | 50 | 32 |
| Geometry 5 | 10 | 12.5 | 50 | 51.34 |
| Geometry 6 | 10 | 12.5 | 30 | 14 |
| Geometry 7 | 30 | 10 | 50 | 26.5 |
| Geometry 8 | 15 | 12.5 | 50 | 40 |
| Geometry 9 | 7.5 | 3.125 | 12.5 | 22.6 |
| Geometry 10 | 12.5 | 12.5 | 50 | 45 |
| Geometry 11 | 10 | 7.5 | 35 | 45 |
| Geometry 12 | 15 | 11.25 | 52.5 | 45 |
| Geometry 13 | 25 | 18.75 | 87.5 | 45 |
| Geometry 14 | 30 | 22.5 | 105 | 45 |

## Claims

1. An energy-absorbing structure (10) for use with a vehicle, comprising a sacrificial member (12) configured to deform permanently when absorbing impact energy; and a skin (14) covering one side of the sacrificial member; **characterised in that** the skin has points or lines of weakness (20) pre-formed therein which are configured to improve macroscopic yieldability of energy absorbing structure when impact energy exceeds a threshold level, whereby the energy-absorbing structure provides pedestrian crash-padding when used externally on a vehicle.

2. An energy-absorbing structure according to claim 1, in which the skin comprises a laminated structure, with the points or lines of weakness being formed in a first layer of the laminated structure.

3. An energy-absorbing structure according to claim 2, in which the skin comprises another layer configured as a protective layer to prevent gaps opening in the skin when the first layer deforms on impact.

4. An energy-absorbing structure according to claim 2 or claim 3, in which the laminated structure is in the form of a sandwich structure with the first layer being sandwiched between two protective layers, at least one of which prevents gaps opening in the skin as the first layer deforms on impact.

5. An energy-absorbing structure according to any one of claims 2 to 4, in which the first layer is bonded to the or each protective layer by an adhesive layer which allows for slippage between layers during impact.

6. An energy-absorbing structure according to any one of claims 1 to 5, in which the lines of weakness in the skin are provided by an array of grooves or slots in one side of the skin.

7. An energy-absorbing structure according to claim 6, in which the said one side of the skin is adjacent to the sacrificial member.

8. An energy-absorbing structure according to claim 6 or claim 7, in which the grooves or slots in the array each have an elongate profile.

9. An energy-absorbing structure according to claim 8, in which at least some of the elongate profiles are aligned.

10. An energy-absorbing structure according to claim 9, in which some of the elongate profiles are aligned in a first direction, and others are aligned in a second direction.

11. An energy-absorbing structure according to claim 10, in which the first and second directions are substantially orthogonal to each other.

12. An energy-absorbing structure according to any one of claims 1 to 5, in which the lines of weakness in the skin are provided by a reinforcing sheet providing a first amount of reinforcement in one region and a second amount of reinforcement in another region, the first reinforcement being greater than the second.

13. An energy-absorbing structure according to claim 12, in which the skin comprises a composite structure having a reinforcing sheet in the form of a textile fabric material.

14. An energy-absorbing structure according to claim 13, in which the textile fabric has different weave densities to achieve the first and second amounts of reinforcement.

15. An energy-absorbing structure according to claim 13, in which the textile fabric has a mixture of higher and lower strength fibres.

16. An energy-absorbing structure according to any one of the preceding claims, in which the sacrificial member has a structure selected from the group consisting of a honeycomb structure and a press load structure.

17. A vehicle in which at least one external part comprises an energy-absorbing structure in accordance with any one of the preceding claims.

18. A method of fabricating pedestrian crash-padding for use externally on a vehicle, comprising: providing a sacrificial member configured to deform permanently when absorbing impact energy; providing a skin to cover one side of the sacrificial member, **characterised in that** the skin having points or lines of weakness therein configured to improve macroscopic yieldability of the skin and the sacrificial member when impact energy exceeds a threshold level; and bonding the skin to the sacrificial member to cover one side thereof.

19. A method according to claim 18, comprising providing a skin in the form of a laminated structure comprising a first layer having points or lines of weakness therein and a protective layer bonded to the first layer to prevent gaps opening in the first layer on impact.

20. A method according to claim 18 or claim 19, comprising cutting an array of grooves or slots in the skin to provide the points or lines or weakness.

21. A method according to claim 20, comprising cutting the array is cut in the surface of the skin, then bonding the skin to the sacrificial member.

22. A method according to claim 18, comprising providing lines of weakness in the skin by providing a reinforcing sheet providing a first amount of reinforcement in one region and a second amount of reinforcement in another region, the first reinforcement being greater than the second.

23. A method according to claim 22, comprising weaving a textile fabric material having regions of different weave densities to provide the first and second amounts of reinforcement.

24. A method according to claim 22, comprising weaving a textile fabric material having a mixture of higher and lower strength fibres to provide the first and second amounts of reinforcement.

## Patentansprüche

1. Energie absorbierende Struktur (10) zur Verwendung mit einem Fahrzeug, die umfasst: ein Opferelement (12), das so gestaltet ist, dass es sich bei der Absorption von Stoßenergie dauerhaft verformt, und eine Haut (14), die eine Seite des Opferelements bedeckt, **dadurch gekennzeichnet, dass** die Haut vorgeformte punkt- oder linienförmige Schwachstellen (20) aufweist, die so gestaltet sind, dass sie die makroskopische Nachgiebigkeit der Energie absorbierenden Struktur verbessern, wenn die Stoßenergie einen Grenzwert überschreitet, wobei die Energie absorbierende Struktur bei externer Verwendung auf einem Fahrzeug als Crash-Pad für Fußgänger fungiert.

2. Energie absorbierende Struktur nach Anspruch 1, **dadurch gekennzeichnet, dass** die Haut eine Schichtstruktur umfasst, wobei die punkt- oder linienförmigen Schwachstellen in einer ersten Schicht der Schichtstruktur ausgebildet sind.

3. Energie absorbierende Struktur nach Anspruch 2, **dadurch gekennzeichnet, dass** die Haut eine weitere Schicht umfasst, die als Schutzschicht gestaltet ist, um zu verhindern, dass sich bei einer stoßbedingten Verformung der ersten Schicht offene Stellen in der Haut bilden.

4. Energie absorbierende Struktur nach Anspruch 2 oder Anspruch 3, **dadurch gekennzeichnet, dass** die Schichtstruktur als Sandwich-Struktur ausgebildet ist, wobei die erste Schicht zwischen zwei Schutzschichten angeordnet ist, von denen zumindest eine verhindert, dass sich bei einer stoßbedingten Verformung der ersten Schicht offene Stellen in der Haut bilden.

5. Energie absorbierende Struktur nach einem der Ansprüche 2 bis 4, **dadurch gekennzeichnet, dass** die erste Schicht mit der oder jeder Schutzschicht mittels einer Klebschicht verbunden ist, die bei einem Stoß eine Verschiebung der Schichten gegeneinander gestattet.

6. Energie absorbierende Struktur nach einem der Ansprüche 1 bis 5, **dadurch gekennzeichnet, dass** die linienförmigen Schwachstellen in der Haut mittels einer Anordnung von Nuten oder Schlitzen in einer Seite der Haut geschaffen werden.

7. Energie absorbierende Struktur nach Anspruch 6, **dadurch gekennzeichnet, dass** die eine Seite der Haut dem Opferelement benachbart ist.

8. Energie absorbierende Struktur nach Anspruch 6 oder Anspruch 7, **dadurch gekennzeichnet, dass** die Nuten oder Schlitze in der Anordnung jeweils ein längliches Profil aufweisen.

9. Energie absorbierende Struktur nach Anspruch 8, **dadurch. gekennzeichnet, dass** zumindest einige der länglichen Profile ausgerichtet sind.

10. Energie absorbierende Struktur nach Anspruch 9, **dadurch gekennzeichnet, dass** einige der länglichen Profile in einer ersten Richtung ausgerichtet sind und andere in einer zweiten Richtung ausgerichtet sind.

11. Energie absorbierende Struktur nach Anspruch 10, **dadurch gekennzeichnet, dass** die erste und die zweite Richtung im Wesentlichen rechtwinklig zueinander verlaufen.

12. Energie absorbierende Struktur nach einem der Ansprüche 1 bis 5, **dadurch gekennzeichnet, dass** die linienförmigen Schwachstellen in der Haut mittels eines flächigen Verstärkungselements geschaffen werden, das in einem Bereich ein erstes Maß an Verstärkung und in einem anderen Bereich ein zweites Maß an Verstärkung bewirkt, wobei die erste Verstärkung größer ist als die zweite.

13. Energie absorbierende Struktur nach Anspruch 12, **dadurch gekennzeichnet, dass** die Haut eine Verbundstruktur umfasst, die ein flächiges Verstärkungselement in Form eines textilen Gewebes aufweist.

14. Energie absorbierende Struktur nach Anspruch 13, **dadurch gekennzeichnet, dass** das textile Gewebe unterschiedliche Webdichten aufweist, um das erste und das zweite Maß an Verstärkung zu erzielen.

15. Energie absorbierende Struktur nach Anspruch 13, **dadurch gekennzeichnet, dass** das textile Gewebe ein Gemisch aus festeren und weniger festen Fasern aufweist.

16. Energie absorbierende Struktur nach einem der vorhergehenden Ansprüche, **dadurch gekennzeichnet, dass** das Opferelement eine Struktur ausgewählt aus der Gruppe bestehend aus einer Wabenstruktur und einer Druckbelastungsstruktur aufweist.

17. Fahrzeug, bei dem zumindest ein externer Teil eine Energie absorbierende Struktur gemäß einem der vorhergehenden Ansprüche umfasst.

18. Verfahren zur Herstellung von Crash-Pads für Fußgänger zur externen Verwendung auf einem Fahrzeug, das umfasst: Bereitstellen eines Opferelements, das so gestaltet ist, dass es sich bei der Absorption von Stoßenergie dauerhaft verformt, Bereitstellen einer Haut, die eine Seite des Opferetements bedeckt, **dadurch gekennzeichnet, dass** die Haut punkt- oder linienförmige Schwachstellen aufweist, die so gestaltet sind, dass sie die makroskopische Nachgiebigkeit der Haut und des Opferelements verbessern, wenn die Stoßenergie einen Grenzwert überschreitet, und Verbinden der Haut mit dem Opferelement, so dass sie eine Seite desselben bedeckt.

19. Verfahren nach Anspruch 18, das umfasst: Bereitstellen einer Haut in Form einer Schichtstruktur, die eine erste Schicht umfasst, die punkt- oder linienförmige Schwachstellen aufweist, und eine Schutzschicht umfasst, die mit der ersten Schicht verbunden ist, um zu verhindern, dass sich bei einem Stoß offene Stellen in der ersten Schicht bilden.

20. Verfahren nach Anspruch 18 oder Anspruch 19, das umfasst: Schneiden einer Anordnung von Nuten oder Schlitzen in die Haut, um die punkt- oder linienförmigen Schwachstellen zu schaffen.

21. Verfahren nach Anspruch 20, das umfasst: Schneiden der Anordnung in die Oberfläche der Haut und anschließendes Verbinden der Haut mit dem Opferelement.

22. Verfahren nach Anspruch 18, das umfasst: Schaffung von linienförmigen Schwachstellen in der Haut mittels eines flächigen Verstärkungselements, das in einem Bereich ein erstes Maß an Verstärkung und in einem anderen Bereich ein zweites Maß an Verstärkung bewirkt, wobei die erste Verstärkung größer ist als die zweite.

23. Verfahren nach Anspruch 22, das umfasst: Weben eines textilen Gewebes, das Bereiche mit unterschiedlichen Webdichten aufweist, um das erste und das zweite Maß an Verstärkung zu erzielen.

24. Verfahren nach Anspruch 22, das umfasst: Weben eines textilen Gewebes, das ein Gemisch aus festeren und weniger festen Fasern aufweist, um das erste und das zweite Maß an Verstärkung zu erzielen.

## Revendications

1. Structure absorbant l'énergie (10) destinée à être utilisée avec un véhicule, comprenant un élément à usage unique (12) configuré pour se déformer de manière permanente lorsqu'il absorbe l'énergie de choc ; et une peau (14) recouvrant un côté de l'élément à usage unique ; **caractérisée en ce que** la peau présente des points ou des lignes de faiblesse (20) préformé(e)s dans celle-ci qui sont configuré(e)s pour améliorer les capacités macroscopiques de la structure absorbant l'énergie lorsque l'énergie de choc dépasse un niveau de seuil, la structure absorbant l'énergie fournissant un dispositif d'amortissement en cas de collision avec un piéton lorsqu'elle est utilisée à l'extérieur d'un véhicule.

2. Structure absorbant l'énergie selon la revendication 1, dans laquelle la peau comprend une structure stratifiée, les points ou lignes de faiblesse étant formé(e)s dans une première couche de la structure stratifiée.

3. Structure absorbant l'énergie selon la revendication 2, dans laquelle la peau comprend une autre couche configurée comme une couche protectrice pour empêcher que des brèches ne s'ouvrent dans la peau lorsque la première couche se déforme lors du choc.

4. Structure absorbant l'énergie selon la revendication 2 ou la revendication 3, dans laquelle la structure stratifiée se présente sous la forme d'une structure en sandwich, la première couche étant intercalée entre deux couches protectrices, dont au moins une empêche que des brèches ne s'ouvrent dans la peau lorsque la première couche se déforme lors du choc.

5. Structure absorbant l'énergie selon l'une quelconque des revendications 2 à 4, dans laquelle la première couche est collée à la ou à chaque couche protectrice par une couche adhésive qui permet un glissement entre les couches lors du choc.

6. Structure absorbant l'énergie selon l'une quelconque des revendications 1 à 5, dans laquelle les lignes de faiblesse dans la peau sont obtenues par un ensemble de rainures ou de fentes d'un côté de la peau.

7. Structure absorbant l'énergie selon la revendication 6, dans laquelle ledit un côté de la peau est adjacent à l'élément à usage unique.

8. Structure absorbant l'énergie selon la revendication 6 ou la revendication 7, dans laquelle les rainures ou fentes dans l'ensemble ont chacune un profil allongé.

9. Structure absorbant l'énergie selon la revendication 8, dans laquelle au moins certains des profils allongés sont alignés.

10. Structure absorbant l'énergie selon la revendication 9, dans laquelle certains des profils allongés sont alignés dans un premier sens, et d'autres sont alignés dans un second sens.

11. Structure absorbant l'énergie selon la revendication 10, dans laquelle les premier et second sens sont sensiblement orthogonaux l'un par rapport à l'autre.

12. Structure absorbant l'énergie selon l'une quelconque des revendications 1 à 5, dans laquelle les lignes de faiblesse dans la peau sont obtenues par une feuille de renforcement procurant un premier degré de renforcement dans une région et un second degré de renforcement dans une autre région, le premier renforcement étant plus important que le second.

13. Structure absorbant l'énergie selon la revendication 12, dans laquelle la peau comprend une structure composite ayant une feuille de renforcement sous la forme d'un tissu textile.

14. Structure absorbant l'énergie selon la revendication 13, dans laquelle le tissu textile a différentes densités de tissage pour obtenir les premier et second degrés de renforcement.

15. Structure absorbant l'énergie selon la revendication 13, dans laquelle le tissu textile a un mélange de fibres plus résistantes et moins résistantes.

16. Structure absorbant l'énergie selon l'une quelconque des revendications précédentes, dans laquelle l'élément à usage unique a une structure choisie dans le groupe consistant en une structure en nid d'abeilles et en une structure de charge de presse.

17. Véhicule dans lequel au moins une partie extérieure comprend une structure absorbant l'énergie selon l'une quelconque des revendications précédentes.

18. Procédé de fabrication d'un dispositif d'amortissement en cas de collision avec un piéton destiné à être utilisé à l'extérieur d'un véhicule, comprenant : la fourniture d'un élément à usage unique configuré pour se déformer de manière permanente lorsqu'il absorbe l'énergie de choc ; la fourniture d'une peau pour recouvrir un côté de l'élément à usage unique, **caractérisé en ce que** la peau présente des points ou des lignes de faiblesse dans celle-ci configuré(e)s pour améliorer les capacités macroscopiques de la peau et de l'élément à usage unique lorsque l'énergie de choc dépasse un niveau de seuil ; et la peau est collée sur l'élément à usage unique pour recouvrir un côté de celui-ci.

19. Procédé selon la revendication 18, comprenant la fourniture d'une peau sous la forme d'une structure stratifiée comprenant une première couche ayant des points ou des lignes de faiblesse dans celle-ci et une couche protectrice collée à la première couche pour empêcher que des brèches ne s'ouvrent dans la première couche lors du choc.

20. Procédé selon la revendication 18 ou la revendication 19, comprenant la découpe d'un ensemble de rainures ou de fentes dans la peau pour fournir les points ou les lignes de faiblesse.

21. Procédé selon la revendication 20, comprenant la découpe de l'ensemble dans la surface de la peau, puis le collage de la peau sur l'élément à usage unique.

22. Procédé selon la revendication 18, comprenant l'obtention de lignes de faiblesse dans la peau en fournissant une feuille de renforcement procurant un premier degré de renforcement dans une région, et un second degré de renforcement dans une autre région, le premier renforcement étant plus important que le second.

23. Procédé selon la revendication 22, comprenant le tissage d'un tissu textile ayant des régions de densités de tissage différentes pour fournir les premier et second degrés de renforcement.

24. Procédé selon la revendication 22, comprenant le tissage d'un tissu textile ayant un mélange de fibres plus résistantes et moins résistantes pour fournir les premier et second degrés de résistance.
